# EUROPEAN PATENT SPECIFICATION

(11) **EP 3 880 487 B1**
(45) Date of publication and mention of the grant of the patent: **31.05.2023**
(21) Application number: 18807204.5
(22) Date of filing: 16.11.2018
(51) Int. Cl.: B42D 25/324, B42D 25/351, B42D 25/328, B42D 25/342, G02B 6/00

(54) **WAVEGUIDE-BASED ANTI-FORGERY SECURITY DEVICE**
WELLENLEITER BASIERTE FÄLSCHUNGSSICHERE SICHERHEITSVORRICHTUNG
DISPOSITIF DE SÉCURITÉ ANTI-CONTREFAÇON À BASE DE GUIDE D'ONDES

(43) Date of publication of application: 22.09.2021
(73) Proprietor: Orell Füssli AG, 8036 Zürich (CH)
(72) Inventor: EICHENBERGER, Martin, 8702 Zollikon (CH); CHOSSON, Sylvain, 8045 Zürich (CH); BASSET, Guillaume, 68330 Huningue (FR)
(74) Representative: E. Blum & Co. AG
(86) International application number: PCT/CH2018/000044
(87) International publication number: WO 2020/097743

(56) References cited:
- WO-A1-2011/072405
- WO-A1-2015/139761
- WO-A1-2016/016638
- WO-A1-2018/161180

## Description

### Technical Field

The invention relates to an anti-forgery security device having an optical waveguide. It also relates to a security document comprising such a security device.

### Background Art

Anti-forgery security devices are used to make the copying of articles more difficult. In particular, they are used on security documents, such as bank-notes or other documents of value as well as on identification documents, vouchers, credit cards, access cards, etc.

Some security devices are based on optical effects that are unique and hard to copy. Examples of such devices include volume holograms or diffractive surface gratings.

WO 2011/072405 describes a device with a waveguide and a lens array.

### Disclosure of the Invention

The problem to be solved by the present invention is to further improve the security of such devices.

This problem is solved by the anti-forgery security device of claim 1.

Hence, the security device comprises:
- An optical waveguide: This is a wave guiding structure as defined in the "definitions" below.
- An out-coupler: This is a structure adapted to couple out light from the waveguide. It comprises first macroscopically repetitive elements. The term "macroscopically repetitive" is as defined under "definitions" below.
- A light processing structure: This structure is arranged to process (i.e. to change) the light coupled out by the out-coupler. It contains second macroscopically repetitive elements, again with "macroscopically repetitive" as defined under "definitions" below.

The interaction of the first and the second macroscopically repetitive elements can be used to generate unique optical effects.

Advantageously, the waveguide has a first and a second side extending parallel to a direction of propagation of light therein. In this case, the out-coupler can be arranged on the first side and the light processing structure can be arranged opposite to the out-coupler on the second side. In other words, the waveguide is located between the out-coupler and the processing structure. Hence, the waveguide forms a spacer between these two structures, which allows generating distinct, luminous Moiré and/or parallax effects that strongly depend on the viewing angle.

In particular, the out-coupler can comprise a relief on the first side of the waveguide. Such a relief, i.e. a structure in the interface of the waveguide to the medium next to it, can be formed against air or against a solid of lower refractive index than the waveguide. Such structures can be used to efficiently couple out light from the waveguide.

The device can further comprise a first coating layer arranged on the first side of the waveguide and covering the out-coupler. Such a coating layer protects the out-coupler mechanically and makes contact-copies more difficult. By having a lower index of refraction, it generates an interface delimiting the waveguide on its first side.

The light processing structure comprises an array of refractive structures. This can be a one-dimensional or a two-dimensional array, i.e. a repetitive arrangement of refractive structures along one or two directions.

The refractive structures comprise advantageously at least one of lenses or prisms.

This array of refractive structures is advantageously arranged on the second side of the waveguide to process light that comes from the out-coupler. This is particularly advantageous if the out-coupler is arranged on the first side of the waveguide because, in that case, the waveguide maintains the out-coupler at a defined distance from the refractive structures and prevents the out-coupler from being too close to them. This allows to optimize the focal length of the refractive structures and to potentially use refractive structures of weaker curvature or surface tilt, without increasing the thickness of the anti-forgery security device. This in turns allow easier integration and better flexibility of the security device.

The security device comprises a second coating layer arranged between the waveguide and the array of refractive structures. This second coating layer has a refractive index lower than the waveguide and thus prevents the refractive structures from coupling out light from the waveguide. Light processing structures such as an array of refractive structures in direct contact with the waveguide (i.e. waveguide core) would scatter/refract/diffract guided-light. Preventing or minimizing the outcoupling of guided-light by the light processing structures, such as an array of refractive structures, allow to generate well-visible and contrasted Moiré and/or parallax effects.

Alternatively or in addition thereto, the array of refractive structures may have a refractive index lower than the waveguide. In that case, the array of refractive structures may be adjacent to the waveguide without coupling out light therefrom.

Advantageously, the first and the second repetitive elements (i.e. the elements of the out-coupler and the elements of the processing structure) have, in at least one direction, first and second periods, respectively. In that case, it is advantageous to meet at least one of the following conditions:
- The first period is substantially equal to the second period. Advantageously, the first and the second periods differ, locally, by no more than 10%. This allows creating distinct interference effects, such as Moiré effects, magnification effects, or tilting effects when the second elements process the light from the first elements.
- The first period is substantially an integer multiple of the second period or vice versa. Advantageously, the ratio between the two periods is no more than 0.1 from an integer value. For example, said ratio may be between 1.9 and 2.1 or between 2.9 and 3.1. This again allows generating effects similar to the ones in in the first case.

In one embodiment, the first and the second repetitive elements (i.e. the elements of the out-coupler and the elements of the processing structure) both form two-dimensional arrays. This allows generating optical effects that repeat in two directions.

The first elements, i.e. the elements of the out-coupler, may comprise coupling elements for a first color and coupling elements for a second color, with the first and second colors being different, to make the security feature more distinct. In this context, distinct colors refer to visually perceptively different colors, in particular corresponding to wavelengths differing at least by 20 nm, in particular at least by 50 nm.

The first elements, i.e. the elements of the out-coupler, can comprise diffractive gratings.

In that case, the first elements may comprise diffractive gratings of at least two different grating spacings and/or diffractive gratings with periodically chirped grating spacing in order to generate distinct colors. In this context, a grating spacing is "chirped" if it varies along one macroscopic period of the first elements in substantially continuous manner.

The security device may further comprise an absorbing structure having third macroscopically repetitive elements in addition to the light processing structure and the out-coupler.

This absorbing structure can interact with the light processing structure in a manner similar to the out-coupler.

Advantageously, the third and the second repetitive elements (i.e. the elements of the absorbing structure and the elements of the processing structure) have, in at least one direction, third and second periods, respectively. In that case, it is advantageous to meet at least one of the following conditions:
- The third period is substantially equal to the second period. Advantageously, the third and the second periods differ, locally, by no more than 10%. This allows creating distinct interference effects, such as Moiré effects, magnification effects, or tilting effects when the second elements process the light from the first elements.
- The third period is substantially an integer multiple of the second period or vice versa. Advantageously, the ratio between the two periods is no more than 0.1 from an integer value. For example, said ratio may be between 1.9 and 2.1 or between 2.9 and 3.1. This again allows generating effects similar to the ones in in the first case.

The security device can further comprise an in-coupler at a distance from the out-coupler and arranged to couple in light into the waveguide. Advantageously, the in-coupler is arranged along a side of the waveguide, e.g. as one or more diffractive gratings.

The distance between the in-coupler and the out-coupler is advantageously at least 1 cm, in particular at least 3 cm, in order to make it easy to apply a light source (such as a phone's camera light) to the in-coupler without obstructing the out-coupler.

The invention also relates to a security document comprising a security device as described above. The security device can e.g. be laminated to a substrate of the security document, or it may e.g. also be an integral part of the document's substrate.

### Brief Description of the Drawings

The invention will be better understood and objects other than those set forth above will become apparent when consideration is given to the following detailed description thereof. This description makes reference to the annexed drawings, wherein:
Fig. 1 is a top view of a security document with a security device,
Fig. 2 is a sectional view of a first embodiment along line II-II of Fig. 1,
Fig. 3 shows a part of an array of elements of an out-coupler,
Fig. 4 shows an example of a pattern generated for an observer from a first viewing angle,
Fig. 5 shows an example of a pattern generated for an observer from a second viewing angle,
Fig. 6 shows a sectional view of a second embodiment,
Fig. 7 shows a sectional view of a third embodiment,
Fig. 8 shows a sectional view of a fourth embodiment,
Fig. 9 shows a top view of a fifth embodiment of a security device,
Fig. 10 shows a top view of a sixth embodiment of a security device with a light source placed over a first in-coupler, and
Fig. 11 shows the embodiment of Fig. 10 with the light source placed over a second in-coupler.

### Modes for Carrying Out the Invention

### Definitions:

- An optical waveguide is a wave guiding structure for infrared, visible and/or ultraviolet light, in particular at at least one wavelength between 250 nm and 2000 nm. Advantageously, the waveguide has an attenuation at said at least one wavelength of less than 3 dB/mm, i.e. of less than 50% per mm, in particular of less than 3 dB/cm i.e. of less than 50% per cm. An optical waveguide is advantageously understood as a multimode waveguide, also called lightguides, preferably a massively multimode lightguide, whose thickness is preferably thicker than 10 microns and therefore being able to guide many modes in the visible, near-infrared and/or near-ultraviolet spectrum, i.e. for wavelengths between 250 nm and 2000 nm. Given the limited spatial and temporal coherence of commonly available light sources, the waveguide is preferably not limited to a finite number of guided modes, i.e. the waveguide is an incoherent optical system for commonly available light sources such as sunlight, LED light, or other broad-spectrum light sources. The waveguides is guiding light by the total internal reflection at the waveguides sides of at least a part of the light injected into the waveguide.
- The term direction of propagation is used to designate the macroscopic main direction of propagation of the light over the anti-forgery security device and does not describe the exact light path inside a waveguide bouncing way and back between its sides, and whose travelling angle can vary and be multiple, for example for different wavelengths when using diffractive waveguide couplers.
- The term "macroscopically repetitive" is used to designate a repetitive structure with a period well longer than the wavelength, i.e. a non-diffracting structure or one whose diffraction is very weak. In particular, the period is at least 10 µm, in particular at least 50 µm. Such a macroscopically repetitive structure may or may not comprise smaller, diffractive structures, too.
- If a material is designated to have a refractive index "lower than the waveguide", said refractive index is understood to be sufficiently low to constrain the light within the waveguide if said material is located adjacent to the waveguide. In one embodiment, the material has a refractive index at least 0.1 below the refractive index of the waveguide, in particular at least 0.2. As known to the skilled person, the minimum refractive index difference can also depend on the thickness of the layers. The refractive index difference can e.g. be smaller for very thick coating layers.
- Periods should be understood as spatial periods. As known in the state of the art, Moiré and/or parallax effect can be created using periodic or pseudo-periodic arrangements. For example, pseudo-periodic arrangements can have a main spatial periodicity and include a deviation of the periodicity in a given range (i.e. 10%) around than main spatial periodicity. Pseudo-periodic arrangements can also comprise periodic arrangements of elements in which the individual elements are varying gradually over several periods. In the present context, pseudo-periodic arrangements are comprised in the term "periodic".

### First embodiment and general comments:

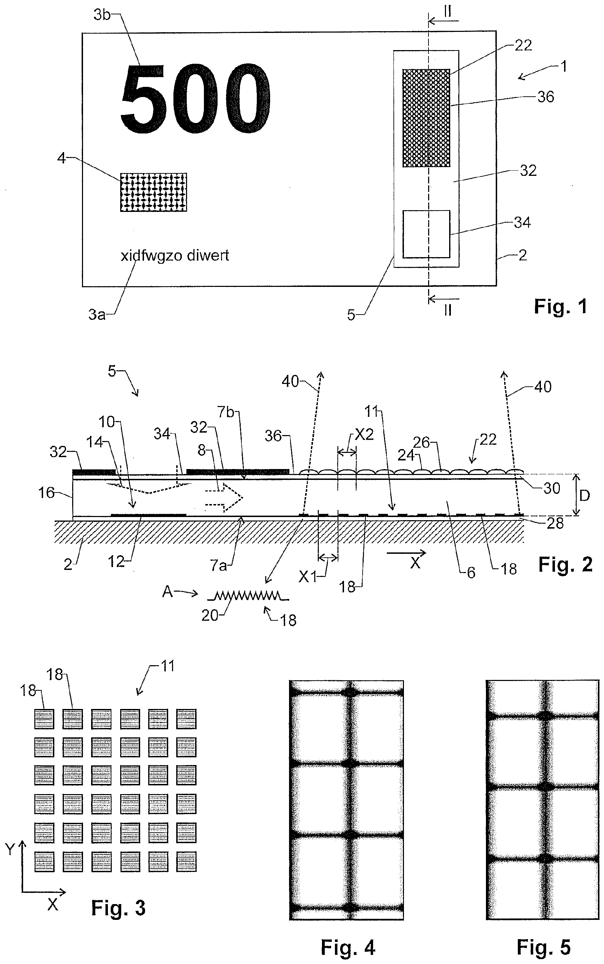

Fig. 1 shows a top view of a security document 1, such as a bank-note or a document of identification. It comprises a substrate 2, which may carry various printed symbols 3a, 3b, e.g. representing human- or machine-readable information or artwork. It also carries one or more security devices 4, 5. These may e.g. include diffractive structures, OVI, or other features that are hard to counterfeit.

One of the security devices, namely security device 5 of the embodiment of Fig. 1, is illustrated in more detail in Figs. 2 - 5.

Security device 5 is e.g. laminated to substrate 2, but it may also be integrated into substrate 2 as shown in an embodiment below. It comprises an optical waveguide 6 for guiding light, such as visible light, therein. Waveguide 6 extends between a first side 7a and a second side 7b, with the propagation direction 8 of light in waveguide 6 being parallel to said first and second sides 7a, 7b.

Security device 5 further comprises an in-coupler 10 for coupling light into waveguide 6 and an out-coupler 11 for coupling light out from waveguide 6.

In-coupler 10 of the present embodiment comprises a diffractive surface grating 12 arranged in or on first side 7a of waveguide 6. It diffracts light 14 entering e.g. through second side 7b into propagation direction 8.

Out-coupler 11 of the present embodiment comprises a plurality of first macroscopically repetitive elements 18. In the embodiment of Fig. 2, each element 18 comprises a diffractive surface grating 20 in or on first side 7a as shown in the enlarged detail A of Fig. 2.

As shown in Fig. 3, which depicts an embodiment of some of the elements 18 from above, the elements 18 may be arranged in a regular, two-dimensional array.

Security device 5 further comprises a light processing structure 22 with second macroscopically repetitive elements 24 for processing the light coupled out by out-coupler 11. These second macroscopically repetitive elements 24 may comprise lenses 26.

Advantageously, the focal length of the lenses 26 corresponds to the distance D between the lenses 26 and the first elements 18 as computed as the focal distance in the media of the security device, having a refractive index above the refractive index of air. The lenses 26 are arranged to perform an approximate Fourier transform of the first elements 18. In that case, the elements 18 are projected into infinity such that an observer viewing the lenses 26 with relaxed eyes (i.e. accommodated to infinity) sees an image of the first elements 18.

Security device 5 further comprises a first coating layer 28 arranged on first side 7a of waveguide 6 and a second coating layer 30 arranged on second side 7b of waveguide 6. Advantageously, both these coating layers are adjacent to waveguide 6.

The coating layers 28, 30 have a refractive index lower than the one of waveguide 6 and optically delimit waveguide 6 to contain the light therein. Advantageously, both coating layers have a thickness of at least 1 µm, in particular of at least 3 µm. As known to the skilled person, the minimum thickness of the coating layers 28, 30 primarily depends on the refractive index difference between the coating layers 28, 30 and waveguide 6.

The coating layers 28, 30 are non-absorbing for the light guided in waveguide 6 or at least for a portion of the light spectrum guided in the waveguide.

Security device 5 may further comprise a mask layer 32, which can be non-transparent. It is advantageously arranged outside coating layer 6 in order not to affect the light guided in waveguide 6.

Mask layer 32 may e.g. be a printed layer of ink.

Mask layer 32 does not cover a first area 34 at the location of in-coupler 10, thus forming an entry window for the light. Further, mask layer 32 does not cover a second area 36 at the location of out-coupler 11, thus forming an exit window for the light.

Mask layer 32 could be arranged directly on said waveguide 6 in a portion of the security device or of a security document comprising this security device, for example to absorb residual light propagating in said waveguide after the location of said outcoupler 11 or for example to create a distinct luminous pattern at one or multiple edges of the security device of a security document comprising this security device.

As can be seen in Figs. 2 and 3, the elements 18 (i.e. the surface gratings 20) of out-coupler 11 as well as the elements 24 (i.e. the lenses 26) of light processing structure 22 are macroscopically repetitive in order to generate distinct optical effects as described above.

In the embodiment shown, the elements 18 of out-coupler 11 have a first period X1 in a direction X, and the elements 24 of light processing structure 22 have a second period X2. The periods X1 and X2 are, advantageously, substantially equal to or integer multiples of each other in the sense described above in order to generate optical effects.

The first elements 18 as well as the second elements 24 each may form a two-dimensional array. The two-dimensional array of the first elements 18 is shown in Fig. 3. Each element 18 may comprise e.g. the diffractive structure 20 of Fig. 2. The two-dimensional array of the first elements 18 extends along directions X and Y, which may be perpendicular to each other. The second elements 24 form a similar two-dimensional array along the directions X and Y. However, the two arrays may also be oriented under other angles in respect to each other, and the angles between their axis directions X, Y is not necessarily 90°.

The periods of repetition along X and Y may be different for the first elements 18, and they may also be different for the second elements 24.

However, in direction Y, the first and second elements advantageously also have periods that are substantially equal to or integer multiples of each other in the sense described above.

Direction X is, in the shown embodiment, parallel to light propagation direction 8 in waveguide 6. However, it may also be under an arbitrary angle thereto.

Such repetitive structures generate Moiré effects. If, as shown here, the first and second elements 18 and 26 are at a distance D from each other, the effects change with viewing angle because the projection direction varies with location, such as illustrated with arrows 40 in Fig. 2.

Thus, for example, from a first direction, a user may see an interference pattern such as shown in Fig. 4, while, from second viewing direction, that interference pattern may look as in Fig. 5.

### Second embodiment:

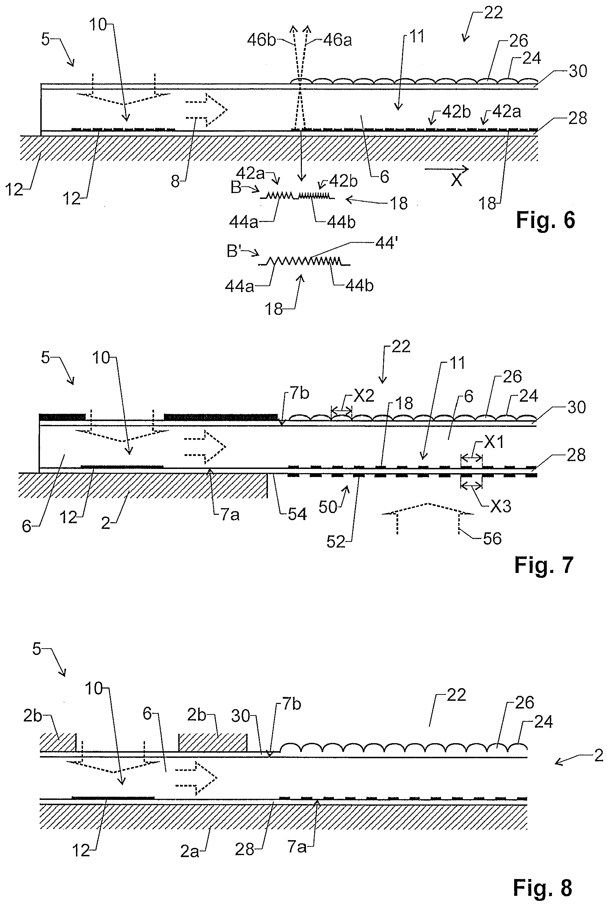

Fig. 6 shows a second embodiment. It differs from the first embodiment i.a. by the design of the first repetitive elements 18. In this embodiment, the first elements 18 comprise coupling elements 42a, 42b for a first and for a second color.

This may be implemented e.g. by using two different diffractive surface gratings 44a, 44b as depicted in enlarged inset B of Fig. 6.

Alternatively, the surface gratings 44a, 44b may be part of a single, chirped grating 44' as shown in enlarged inset B' of Fig. 6. A chirped grating having a gradually varying grating spacing can diffract over its area an identical wavelength or color range at varying angle. This can be used for example to provide a stable color over the area of such repetitive elements 18, and especially to provide a stable color after being processed by the corresponding second elements 24, for example lenses 26.

Advantageously, there is at least one such first and second coupling element 42a, 42b for at least some of the second elements 24, i.e. for at least some of the lenses 26. Thus, and as indicated by arrows 46a, 46b, the images of the two coupling elements 42a, 42b (i.e. the differently colored light waves coupled out at them) are projected into and can be seen from different directions, which again gives rise to distinct color effects that vary with the viewing direction.

As also seen in Fig. 6, the first and second coupling elements 42a, 42b are arranged alternatingly along at least one direction, such as along direction X.

In this embodiment, in-coupler 10 should be designed to couple in light of both colors. This can e.g. be achieved by using a surface grating that contains gratings of differing grating spacing, in particular the same grating spacings as used by the two coupling elements 42a, 42b. These two gratings of in-coupler 10 can e.g. be arranged alternatingly, side by side, as shown in Fig. 6, or they can be superimposed at the same location.

The embodiment of Fig. 6 also illustrates that mask layer 32 (cf. Fig. 2) is optional.

### Third embodiment:

The embodiment of Fig. 7 comprises an absorbing structure 50 having third repetitive elements 52.

In this context, "absorbing" designates a material that absorbs light at least for one wavelength of the NIR-VIS-UV spectrum between 250 nm and 2000 nm. Advantageously, they absorb light for at least one wavelength of the visible spectrum between 400 and 800 nm. In particular, they are visible to the naked eye.

Absorbing structure 50 may have a perceptible color different from the light guided in waveguide 6 and coupled out by out-coupler 11 in order to be visually distinct.

The third repetitive elements 52 are advantageously arranged on first side 7a of waveguide 6, such that they are at a large distance from processing structure 22 and are able to generate Moiré and/or parallax effects when the observer changes his viewing direction.

In the embodiment shown, the third repetitive elements 52 have a third period X3 in a direction X. The periods X2 and X3 are, advantageously, substantially equal to or integer multiples of each other in the sense described above in order to generate optical effects.

Advantageously, the third period X3 is substantially equal to the first period X1 of the first elements 18 of out-coupler 11.

Thus, Moiré and/or parallax effects can be observed in the security device in two different ways:
- In the absence of guided light in waveguide 6, these effects are generated by the interaction of the second elements 24 and the third elements 52.
- When light is guided in waveguide 6, further such effects are generated by the interaction of the second elements 24 with the first elements 18.

Advantageously, first coating layer 28 is arranged between out-coupler 11 and absorbing structure 50 such that absorbing structure 50 does not absorb light guided in waveguide 6.

The embodiment of Fig. 7 further illustrates that security document 2 may be transparent at the location of out-coupler 11, e.g. by having a window-like opening or cut-out 54 at the location of out-coupler 11. This allows to observe the structure under transmission with light 56 entering from second side 7a.

This is particularly useful in the presence of the third elements 52, which can be readily observed in transmission. However, also the first elements 18 may appear in transmission, hence locating out-coupler 11 at a transparent region (such as an opening or window) of document 1 may be advantageous with or without the presence of the third elements 52.

### Fourth embodiment:

The embodiment of Fig. 8 illustrates some further aspects of the device.

In this example, waveguide 6 forms part of substrate 2. Namely, it forms an inner layer of substrate 2, with at least one further layer 2a, 2b arranged at its first and/or second side 7a, 7b.

Further layers 2a, 2b are advantageously non-transparent for at least one wavelength of the visible spectrum. They may e.g. be formed by ink and/or layers of paper.

A further aspect shown in Fig. 8 is that processing structure 22 may be formed at least in part of second coating layer 30, i.e. of a material having lower index of refraction than waveguide 6.

### Fifth embodiment:

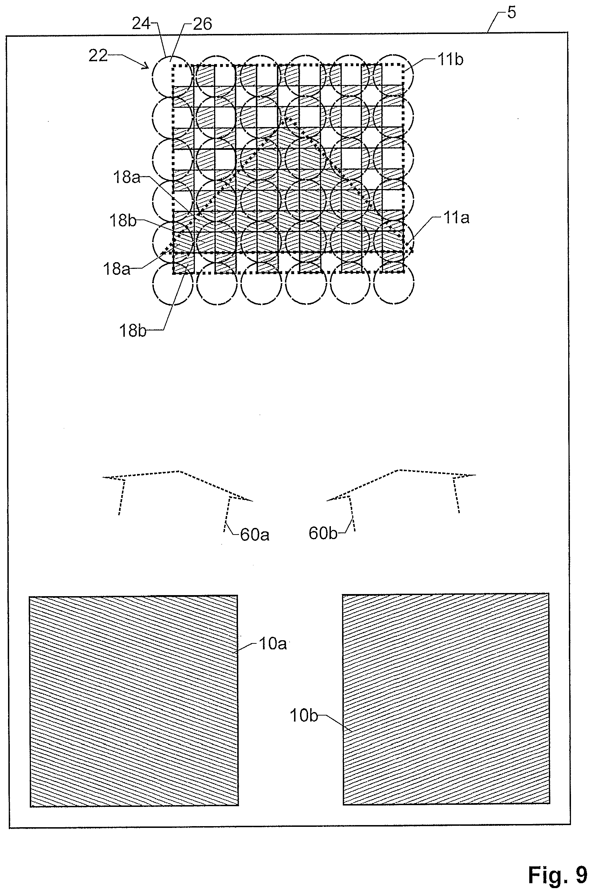

The embodiment of Fig. 9 shows a security device having at least two in-couplers 10a, 10b.

In-couplers 10a, 10b maybe at a distance from each other, adjacent to each other, or partially overlapping. Advantageously they have, however, distinct regions located at a distance from each other.

The two in-couplers differ in at least one or both of the following aspects:
- They couple light of differing colors into waveguide 6, e.g. by being diffractive gratings having different grating spacings.
- They couple light into differing propagation directions into waveguide 6, e.g. by being diffractive gratings with their grating vectors extending in differing directions. In Fig. 9, this is illustrated by the arrows 60a, 60b respectively. Different propagation directions are preferably separated by an angle of 15 degrees or larger than 15 degrees.

The embodiment of Fig. 9 further comprises two out-couplers 11a, 11b. In the embodiment shown, they are formed by differing types of first elements 18a, 18b, which are advantageously arranged in different, optionally overlapping regions.

In the shown embodiment, the first region, i.e. the first out-coupler 11a, has substantially the shape of a triangle while the second region, i.e. the second out-coupler 11b, has substantially the shape of a rectangle.

Where the two out-couplers 11a overlap, the two types of first elements 18a, 18b maybe arranged alternatingly (e.g. in a chessboard pattern as shown), or they may be superimposed.

The two out-couplers 11a, 11b differ in at least one of the following aspects:
- The couple light of differing color out of waveguide 6, e.g. by being diffractive gratings having different grating spacings.
- They couple light from differing directions out of waveguide 6, e.g. by being diffractive gratings with their grating vectors extending in differing directions. In Fig. 9, this is illustrated by the arrows 60a, 60b respectively.

Advantageously, first out-coupler 11a is structured to couple out light coupled in by first in-coupler 10a, and second out-coupler 11b is structured to couple out light coupled in by second in-coupler 10b.

Again, the device comprises a light processing structure 22 having second repetitive elements 24, such as lenses, that process the light from the out-couplers 11a, 11b along the embodiments described herein in order to generate e.g. Moiré effects and/or parallax effects.

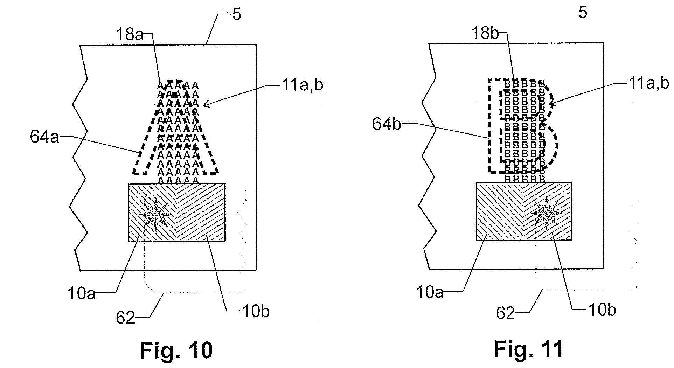

This design can e.g. be used in the manner as depicted in Figs. 10, 11. Here, the two out-couplers 11a,b are e.g. formed by superimposed gratings, with their second elements 18a, 18b having different shapes, such as a letter A and a letter B.

When light is coupled in at the location of first in-coupler 10a (e.g. by using a mobile phone 62 with an integrated light source), the elements 18a of first out-coupler 11a will light up, see Fig. 10. When light is coupled in at the location of second in-coupler 10b, the elements 18b of second out-coupler 11b will light up, see Fig. 11.

The embodiment of Figs. 10, 11 again comprises a light processing structure (not shown). For example, the mutual mismatch between periods of the light processing structure and of the out-couplers 11a,b can be chosen such that the second elements 18a, 18b are visually enlarged for the observer, thus e.g. resulting in recognizable, zoomed letters A and B as indicated in dotted lines 64a, 64b in Figs. 10, 11.

### Notes:

Waveguide 6 is advantageously of a plastic material. It may be transparent and wave guiding over part or all of the visible, near-infrared and/or near-ultraviolet spectrum between 250 nm and 2000 nm.

A typical thickness of waveguide 6 is between 10 and 100 µm, in particular between 20 and 50 µm. A waveguide with this thickness is reasonably robust yet still flexible and does not significantly affect the mechanical properties of the security device and the security document comprising it.

In-coupler 10 in the embodiments above is a diffractive grating (a surface grating arranged on one or both of the sides 7a, 7b or a volume grating) that deflects light entering through one of the sides 7a, 7b into propagation direction 8. A surface grating may e.g. be embossed into side 7a and/or 7b of waveguide 6. As known in the prior art, surface grating can be coated, for example with high-refractive index dielectrics, to keep or enhance their diffraction efficiency while being embedded, see e.g. US9739950.

In-coupler 10 may, however, also be a scattering structure or a refractive structure, in particular if a broader spectrum of light is to be coupled into the waveguide. It may also comprise fluorescent dyes and/or quantum dots and/or optical up-converters (such as up-converting pigments or non-linear optical materials).

In-coupler 10 can also be dispensed with if light is to be coupled in from an edge (such as edge 16 in Fig. 2) of waveguide 6 or if a light source (such as an electroluminescent dye) is incorporated into waveguide 6.

Similarly, the elements 18 of out-coupler 11 may be diffractive gratings, in particular surface gratings 20, as shown above. Alternatively, they may e.g. also comprise volume gratings, scattering or refractive structures, and/or fluorescent dyes.

The light processing structure may comprise a refractive microlens array, a diffractive microlens array such as Fresnel microlenses. The light processing structure may be adapted to be coated with a cover layer or may be coated with a cover layer, for example a transparent material having a refractive index different from the light processing structure. As an example, refractive lenses 26 can be made in a refractive index larger than a protecting cover layer and the design of the lenses 26 (i.e. curvature) is adapted for the two material refractive indexes.

The out-coupler may e.g. also comprise, in addition or alternatively to a diffractive grating, at least one of the following elements:
- Micro-prisms, in particular micro-prisms coated with a high refractive index dielectric coating, a metal coating, or a multilayer coating to embed them. Such prisms can, in particular, include non-diffractive prisms, i.e. periodic prisms with a period much larger than 1 µm, in particular with a period larger than 10 µm.
- Light scattering structures such as surface embossed diffusive structures. Such structures may again be coated or embedded. This may include non-periodic structures that do not give rise to diffraction.
- Laser-generated scattering or absorbing structures, e.g. created by carbonizing and/or temporarily melting parts of a polymer waveguide with a laser.

The absorbing structure may also be formed at least in part by carbonized polymer material, where the carbonization may be carried out by laser irradiation. In other words, the absorbing structures may be manufactured by non-homogeneously irradiating the waveguide with a laser.

The elements of the light-processing structure may, as mentioned above, be lenses, including a one- or two-dimensional array of lenses. They can comprise circular lenses, but they may also e.g. comprise an assembly of cylindrical lenses arranged parallel and side-by side to each other. The may also comprise non-lenticular elements, such as prisms, grooves, wells, etc.

The angle between the axes of the arrays of the first elements and the second elements and/or between the axes of the arrays of the first elements and the third elements may, as mentioned, be zero or any other angle.

As explained, the present technique allows generating Moiré-type effects based on the interaction of the light processing structure with the out-coupler and/or with the absorbing structure. For example, the effects described in any one or several of the following documents may be employed:
- US 5995638, "Methods and apparatus for authentication of documents by using the intensity profile of moire patterns" by Isaac Amidror, Roger D. Hersch, see.
- US 6819775, "Authentication of documents and valuable articles by using moire intensity profiles", by I. Amidror, R.D. Hersch
- US 7194105, "Authentication of documents and articles by moire patterns" by R.D. Hersch, S. Chosson
- US 7751608, "Model-based synthesis of band moire images for authenticating security documents and valuable products" by R.D. Hersch, S. Chosson
- US 7305105, "Authentication of secure items by shape level lines", R. D. Hersch, S. Chosson
- US 7058202, "Authentication with built-in encryption by using moire intensity profiles between random layers" by I. Amidror.

The anti-forgery security device may comprise an adhesive such as a hot-melt glue to be glued or hot-stamped to a security document, or the security device may be cold-stamped to a security document. For manufacturing reasons, it may be manufactured on a carrier foil before its assembly with a security document. This carrier foil is separated from the security device after its assembly.

The security device may comprise various other overt and covert security features as known from the prior-art.

While there are shown and described presently preferred embodiments of the invention, it is to be distinctly understood that the invention is not limited thereto but may be otherwise variously embodied and practiced within the scope of the following claims.

## Claims

1. An anti-forgery security device comprising
an optical waveguide (6),
an out-coupler (11) comprising first macroscopically repetitive elements (18) and being arranged to couple out light from said waveguide (6),
a light processing structure (22) comprising second macroscopically repetitive elements and being arranged to process light coupled out by said out-coupler (11), wherein said light processing structure (22) comprises an array of refractive structures (24),
wherein said security device comprises
a second coating layer (30) arranged between said waveguide (6) and said array of refractive structures (24), wherein said second coating layer (30) has a refractive index lower than said waveguide (6).

2. The security device of claim 1, wherein said waveguide (6) has a first and a second side (7a, 7b) extending parallel to a direction of propagation of light in said waveguide (6), wherein said out-coupler (11) is arranged on said first side (7a) and said light processing structure (22) is arranged opposite to said out-coupler (11) on said second side (7b).

3. The security device of claim 2, wherein said out-coupler (11) comprises a relief on said first side (7a).

4. The security device of any of the claims 2 or 3 further comprising a first coating layer (28) arranged on said first side (7a) and covering said out-coupler (11), wherein said first coating layer (28) has a refractive index lower than said waveguide (6).

5. The security device of any of the claims 2 to 4 wherein said array of refractive structures (24) is arranged on said second side (7b).

6. The security device of any of the preceding claims wherein said refractive structures (24) comprise at least one of lenses and prisms.

7. The security device of any of the preceding claims wherein said array of refractive structures (24) has a refractive index lower than the waveguide (6).

8. The security device of any of the preceding claims wherein said first and said second repetitive elements (18, 24) have, in at least one direction, a first and a second period, respectively, wherein said first period is substantially equal to the second period or wherein said first period is substantially an integer multiple of said second period or wherein said second period is substantially an integer multiple of the first period.

9. The security device of any of the preceding claims wherein said first elements (18) and said second elements (24) each form a two-dimensional array.

10. The security device of any of the preceding claims wherein said first elements (18) comprise coupling elements (42a) for a first color and coupling elements (42b) for a second color, with said first and second colors being different.

11. The security device of claim 10 wherein the first and the second coupling elements (42a, 42b) are arranged alternatingly along at least one direction.

12. The security device of claim 11 wherein, for at least some of the second elements (24) of the out-coupler (11), there is at least one coupling element (42b) for the first color and at least one coupling element (42b) for the second color.

13. The security device of any of the preceding claims wherein said first elements (18) comprise diffractive gratings (44).

14. The security device of claim 13, wherein said first elements (18) comprise diffractive gratings (44a, 44b)
- of at least two different grating spacings and/or
- with periodically chirped grating spacing by varying the grating spacing along one macroscopic period of the first elements in continuous manner,
thereby generating distinct colors.

15. The security device of any of the preceding claims further comprising an absorbing structure (50) comprising third macroscopically repetitive elements (52).

16. The security device of claim 15 wherein said third (52) and said second repetitive elements (24) have, in at least one direction, a third and a second period, respectively, wherein said third period is substantially equal to the second period or wherein said third period is substantially an integer multiple of said second period or wherein said second period is substantially an integer multiple of the third period.

17. The security device of any of the claims 15 or 16 and of claim 2, wherein said absorbing structure (50) is arranged on said first side (7a).

18. The security device of the claims 17 and 4 wherein said first coating layer (28) is arranged between said out-coupler (11) and said absorbing structure (50).

19. The security device of any of the preceding claims further comprising an in-coupler (10) at a distance from said out-coupler (11) and arranged to couple in light into said waveguide (6), and in particular where said in-coupler (10) is arranged along a side of said waveguide (6).

20. The security device of the claims 19 and 10, wherein said in-coupler is adapted to couple in light of said first and said second color.

21. The security device of any of the claims 19 or 20 comprising at least two in-couplers (10a, 10b), wherein said at least two in-couplers couple (10a, 10b) light of differing colors into said waveguide (6) and/or wherein said at least two in-couplers couple light into differing directions (60a, 60b) into said waveguide (6).

22. The security device of any of the preceding claims comprising at least two out-couplers (11a, 11b), wherein said at least two out-couplers (11a, 11b) couple light of differing colors out of said waveguide (6) and/or wherein said at least two out-couplers (11a, 11b) couple light from differing directions out of said waveguide (6).

23. The security device of the claims 21 and 22 wherein said first out-coupler (11a) is structured to couple out light coupled in by first in-coupler (10a), and wherein said second out-coupler (11b) is structured to couple out light coupled in by second in-coupler (10b).

24. A security document comprising the security device of any of the preceding claims, and in particular wherein said out-coupler (11) is arranged at a transparent region (54) of said document.

## Patentansprüche

1. Eine fälschungssichere Sicherheitsvorrichtung umfassend
einen Lichtwellenleiter (6),
einen Auskoppler (11), der erste sich makroskopisch wiederholende Elemente (18) umfasst und so angeordnet ist, dass er Licht aus dem Wellenleiter (6) auskoppelt,
eine Lichtverarbeitungsstruktur (22), die zweite sich makroskopisch wiederholende Elemente umfasst und so angeordnet ist, dass sie von dem Auskoppler (11) ausgekoppeltes Licht verarbeitet, wobei die Lichtverarbeitungsstruktur (22) eine Anordnung von brechenden Strukturen (24) umfasst,
wobei die Sicherheitsvorrichtung eine zweite Beschichtungsschicht (30) umfasst, die zwischen dem Wellenleiter (6) und der Anordnung von brechenden Strukturen (24) angeordnet ist, wobei die zweite Beschichtungsschicht (30) einen niedrigeren Brechungsindex als der Wellenleiter (6) aufweist.

2. Die Sicherheitsvorrichtung nach Anspruch 1, wobei der Wellenleiter (6) eine erste und eine zweite Seite (7a, 7b) aufweist, die sich parallel zu einer Ausbreitungsrichtung von Licht im Wellenleiter (6) erstrecken, wobei der Auskoppler (11) auf der ersten Seite (7a) angeordnet ist und die Lichtverarbeitungsstruktur (22) gegenüber dem Auskoppler (11) auf der zweiten Seite (7b) angeordnet ist.

3. Die Sicherheitsvorrichtung nach Anspruch 2, wobei der Auskoppler (11) auf der ersten Seite (7a) ein Relief aufweist.

4. Die Sicherheitsvorrichtung nach einem der Ansprüche 2 oder 3, weiter umfassend eine erste Beschichtungsschicht (28), die auf der ersten Seite (7a) angeordnet ist und den Auskoppler (11) bedeckt, wobei die erste Überzugsschicht (28) einen Brechungsindex aufweist, der niedriger ist als derjenige des Wellenleiters (6).

5. Die Sicherheitsvorrichtung nach einem der Ansprüche 2 bis 4, wobei die Anordnung von brechenden Strukturen (24) auf der zweiten Seite (7b) angeordnet ist.

6. Die Sicherheitsvorrichtung nach einem der vorangehenden Ansprüche, bei der die brechenden Strukturen (24) mindestens Linsen und/oder Prismen umfassen.

7. Die Sicherheitsvorrichtung nach einem der vorangehenden Ansprüche, wobei die Anordnung von brechenden Strukturen (24) einen niedrigeren Brechungsindex als der Wellenleiter (6) aufweist.

8. Die Sicherheitsvorrichtung nach einem der vorangehenden Ansprüche, wobei das erste und das zweite sich wiederholende Element (18, 24) in mindestens einer Richtung eine erste bzw. eine zweite Periode aufweisen, wobei die erste Periode im Wesentlichen gleich der zweiten Periode ist oder wobei die erste Periode im Wesentlichen ein ganzzahliges Vielfaches der zweiten Periode ist oder wobei die zweite Periode im Wesentlichen ein ganzzahliges Vielfaches der ersten Periode ist.

9. Die Sicherheitsvorrichtung nach einem der vorangehenden Ansprüche, wobei die ersten Elemente (18) und die zweiten Elemente (24) jeweils eine zweidimensionale Anordnung bilden.

10. Die Sicherheitsvorrichtung nach einem der vorangehenden Ansprüche, wobei die ersten Elemente (18) Kopplungselemente (42a) für eine erste Farbe und Kopplungselemente (42b) für eine zweite Farbe umfassen, wobei die erste und zweite Farbe unterschiedlich sind.

11. Die Sicherheitsvorrichtung nach Anspruch 10, bei der die ersten und die zweiten Kopplungselemente (42a, 42b) abwechselnd entlang mindestens einer Richtung angeordnet sind.

12. Die Sicherheitsvorrichtung nach Anspruch 11, wobei für mindestens einige der zweiten Elemente (24) des Auskopplers (11) mindestens ein Kopplungselement (42b) für die erste Farbe und mindestens ein Kopplungselement (42b) für die zweite Farbe vorhanden ist.

13. Die Sicherheitsvorrichtung nach einem der vorangehenden Ansprüche, wobei die ersten Elemente (18) beugende Gitter (44) umfassen.

14. Die Sicherheitsvorrichtung nach Anspruch 13, wobei die ersten Elemente (18) Beugungsgitter (44a, 44b) umfassen
- mit mindestens zwei unterschiedlichen Gitterabständen und/oder
- mit periodisch gechirpten Gitterabständen durch kontinuierliches Variieren der Gitterabstände entlang einer makroskopischen Periode der ersten Elemente,
wodurch unterschiedliche Farben erzeugt werden.

15. Die Sicherheitsvorrichtung nach einem der vorangehenden Ansprüche, weiter umfassend eine absorbierende Struktur (50) umfassend dritte makroskopisch wiederkehrende Elemente (52).

16. Die Sicherheitsvorrichtung nach Anspruch 15, wobei das dritte (52) und das zweite sich wiederholende Element (24) in mindestens einer Richtung eine dritte bzw. eine zweite Periode aufweisen, wobei die dritte Periode im Wesentlichen gleich der zweiten Periode ist oder wobei die dritte Periode im Wesentlichen ein ganzzahliges Vielfaches der zweiten Periode ist oder wobei die zweite Periode im Wesentlichen ein ganzzahliges Vielfaches der dritten Periode ist.

17. Die Sicherheitsvorrichtung nach einem der Ansprüche 15 oder 16 und nach Anspruch 2, wobei die absorbierende Struktur (50) auf der ersten Seite (7a) angeordnet ist.

18. Die Sicherheitsvorrichtung nach einem der Ansprüche 17 und 4, wobei die erste Beschichtungsschicht (28) zwischen dem Auskoppler (11) und der absorbierenden Struktur (50) angeordnet ist.

19. Die Sicherheitsvorrichtung nach einem der vorangehenden Ansprüche, weiter umfassend einen Einkoppler (10) in einem Abstand von dem Auskoppler (11), der so angeordnet ist, dass er Licht in den Wellenleiter (6) einkoppelt, und insbesondere, wobei der Einkoppler (10) entlang einer Seite des Wellenleiters (6) angeordnet ist.

20. Die Sicherheitsvorrichtung nach einem der Ansprüche 19 und 10, wobei der Einkoppler so ausgebildet ist, dass er Licht der ersten und der zweiten Farbe einkoppelt.

21. Die Sicherheitsvorrichtung nach einem der Ansprüche 19 oder 20, umfassend mindestens zwei Einkoppler (10a, 10b), wobei die mindestens zwei Einkoppler (10a, 10b) Licht unterschiedlicher Farbe in den Wellenleiter (6) einkoppeln und/oder wobei die mindestens zwei Einkoppler Licht in unterschiedliche Richtungen (60a, 60b) in den Wellenleiter (6) einkoppeln.

22. Die Sicherheitsvorrichtung nach einem der vorangehenden Ansprüche, umfassend mindestens zwei Auskoppler (11a, 11b), wobei die mindestens zwei Auskoppler (11a, 11b) Licht unterschiedlicher Farben aus dem Wellenleiter (6) auskoppeln und/oder wobei die mindestens zwei Auskoppler (11a, 11b) Licht aus unterschiedlichen Richtungen aus dem Wellenleiter (6) auskoppeln.

23. Die Sicherheitsvorrichtung nach einem der Ansprüche 21 und 22, wobei der erste Auskoppler (11a) so aufgebaut ist, dass er vom ersten Einkoppler (10a) eingekoppeltes Licht auskoppelt, und wobei der zweite Auskoppler (11b) so aufgebaut ist, dass er vom zweiten Einkoppler (10b) eingekoppeltes Licht auskoppelt.

24. Ein Sicherheitsdokument umfassend die Sicherheitsvorrichtung nach einem der vorangehenden Ansprüche, und insbesondere wobei der Auskoppler (11) in einem transparenten Bereich (54) des Dokuments angeordnet ist.

## Revendications

1. Un dispositif de sécurité infalsifiable comprenant
un guide d'onde optique (6),
un coupleur de sortie (11) comprenant des premiers éléments macroscopiques répétitifs (18) et agencé pour extraire de la lumière du guide d'ondes (6),
une structure de traitement de la lumière (22) comprenant des deuxièmes éléments répétitifs macroscopiques et agencée pour traiter la lumière couplée à partir du coupleur de sortie (11), la structure de traitement de la lumière (22) comprenant un agencement de structures réfringentes (24),
dans lequel le dispositif de sécurité comprend une deuxième couche de revêtement (30) disposée entre le guide d'onde (6) et l'ensemble de structures réfringentes (24), la deuxième couche de revêtement (30) ayant un indice de réfraction inférieur à celui du guide d'onde (6).

2. Le dispositif de sécurité selon la revendication 1, dans lequel le guide d'onde (6) présente une première et une deuxième face (7a, 7b) s'étendant parallèlement à une direction de propagation de la lumière dans le guide d'onde (6), le coupleur de sortie (11) étant disposé sur la première face (7a) et la structure de traitement de la lumière (22) étant disposée de l'autre côté du coupleur de sortie (11) sur la deuxième face (7b).

3. Le dispositif de sécurité selon la revendication 2, dans lequel le coupleur de sortie (11) présente un relief sur la première face (7a).

4. Le dispositif de sécurité selon l'une des revendications 2 ou 3, comprenant en outre une première couche de revêtement (28) disposée sur la première face (7a) et recouvrant le coupleur de sortie (11), la première couche de revêtement (28) présentant un indice de réfraction inférieur à celui du guide d'onde (6).

5. Le dispositif de sécurité selon l'une des revendications 2 à 4, dans lequel l'ensemble de structures réfringentes (24) est disposé sur la deuxième face (7b).

6. Le dispositif de sécurité selon l'une des revendications précédentes, dans lequel les structures réfringentes (24) comprennent au moins des lentilles et/ou des prismes.

7. Le dispositif de sécurité selon l'une des revendications précédentes, dans lequel l'ensemble de structures réfringentes (24) présente un indice de réfraction inférieur à celui du guide d'onde (6).

8. Le dispositif de sécurité selon l'une des revendications précédentes, dans lequel les premier et deuxième éléments répétitifs (18, 24) présentent respectivement une première et une deuxième période dans au moins une direction, la première période étant sensiblement égale à la deuxième période ou la première période étant sensiblement un multiple entier de la deuxième période ou la deuxième période étant sensiblement un multiple entier de la première période.

9. Le dispositif de sécurité selon l'une des revendications précédentes, dans lequel les premiers éléments (18) et les deuxièmes éléments (24) forment chacun un ensemble bidimensionnel.

10. Le dispositif de sécurité selon l'une des revendications précédentes, dans lequel les premiers éléments (18) comprennent des éléments de couplage (42a) pour une première couleur et des éléments de couplage (42b) pour une deuxième couleur, les première et deuxième couleurs étant différentes.

11. Le dispositif de sécurité selon la revendication 10, dans lequel les premiers et les deuxièmes éléments de couplage (42a, 42b) sont disposés en alternance selon au moins une direction.

12. Le dispositif de sécurité selon la revendication 11, dans lequel, pour au moins certains des deuxièmes éléments (24) du coupleur de sortie (11), il existe au moins un élément de couplage (42b) pour la première couleur et au moins un élément de couplage (42b) pour la deuxième couleur.

13. Le dispositif de sécurité selon l'une des revendications précédentes, dans lequel les premiers éléments (18) comprennent des grilles diffractives (44).

14. Le dispositif de sécurité selon la revendication 13, dans lequel les premiers éléments (18) comprennent des réseaux de diffraction (44a, 44b)
- avec au moins deux espacements de grille différents et/ou
- avec des espacements de réseau chirés périodiquement en faisant varier de manière continue les espacements de réseau le long d'une période macroscopique des premiers éléments,
ce qui permet de produire des couleurs différentes.

15. Le dispositif de sécurité selon l'une des revendications précédentes, comprenant en outre une structure absorbante (50) comprenant des troisièmes éléments (52) se répétant de manière macroscopique.

16. Le dispositif de sécurité selon la revendication 15, dans lequel le troisième (52) et le deuxième élément répétitif (24) ont respectivement une troisième et une deuxième période dans au moins une direction, dans lequel la troisième période est sensiblement égale à la deuxième période ou dans lequel la troisième période est sensiblement un multiple entier de la deuxième période ou dans lequel la deuxième période est sensiblement un multiple entier de la troisième période.

17. Le dispositif de sécurité selon l'une des revendications 15 ou 16 et selon la revendication 2, dans lequel la structure absorbante (50) est disposée sur la première face (7a).

18. Le dispositif de sécurité selon l'une des revendications 17 et 4, dans lequel la première couche de revêtement (28) est disposée entre le coupleur de sortie (11) et la structure absorbante (50).

19. Le dispositif de sécurité selon l'une des revendications précédentes, comprenant en outre un coupleur d'entrée (10) à distance du coupleur de sortie (11), agencé pour injecter de la lumière dans le guide d'onde (6), et notamment dans lequel le coupleur d'entrée (10) est disposé le long d'un côté du guide d'onde (6).

20. Le dispositif de sécurité selon l'une des revendications 19 et 10, dans lequel le coupleur simple est agencé pour injecter de la lumière de la première et de la deuxième couleur.

21. Le dispositif de sécurité selon l'une des revendications 19 ou 20, comprenant au moins deux coupleurs simples (10a, 10b), lesdits au moins deux coupleurs simples (10a, 10b) injectant de la lumière de couleur différente dans le guide d'onde (6) et/ou lesdits au moins deux coupleurs simples injectant de la lumière dans des directions différentes (60a, 60b) dans le guide d'onde (6).

22. Le dispositif de sécurité selon l'une des revendications précédentes, comprenant au moins deux coupleurs de sortie (11a, 11b), dans lequel lesdits au moins deux coupleurs de sortie (11a, 11b) couplent de la lumière de différentes couleurs hors du guide d'onde (6) et/ou dans lequel lesdits au moins deux coupleurs de sortie (11a, 11b) couplent de la lumière dans différentes directions hors du guide d'onde (6).

23. Le dispositif de sécurité selon l'une des revendications 21 et 22, dans lequel le premier coupleur de sortie (11a) est configuré pour extraire la lumière injectée par le premier coupleur d'entrée (10a), et dans lequel le deuxième coupleur de sortie (11b) est configuré pour extraire la lumière injectée par le deuxième coupleur d'entrée (10b).

24. Un document de sécurité comprenant le dispositif de sécurité selon l'une des revendications précédentes, et en particulier dans lequel le coupleur de sortie (11) est disposé dans une zone transparente (54) du document.
